(19) Europäisches Patentamt
European Patent Office
Office européen des brevets

(11) **EP 3 634 670 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **18736776.8**

(22) Anmeldetag: **22.05.2018**

(51) Internationale Patentklassifikation (IPC):
**B23C 3/18** (2006.01)   **B23C 5/20** (2006.01)
**B23C 1/12** (2006.01)

(52) Gemeinsame Patentklassifikation (CPC):
**B23C 3/18; B23C 1/12; B23C 5/202;**
B23C 2200/0444; B23C 2200/0461;
B23C 2200/0483; B23C 2200/203;
B23C 2210/0407; B23C 2215/44; B23C 2220/04;
B23C 2220/44

(86) Internationale Anmeldenummer:
**PCT/AT2018/000048**

(87) Internationale Veröffentlichungsnummer:
**WO 2018/223159 (13.12.2018 Gazette 2018/50)**

(54) **FRÄSVERFAHREN UND VERWENDUNG EINES SCHNEIDEINSATZES**

MILLING METHOD AND USE OF A CUTTING INSERT

PROCÉDÉ DE FRAISAGE ET UTILISATION D'UNE PLAQUETTE DE COUPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2017 AT 12717 U**

(43) Veröffentlichungstag der Anmeldung:
**15.04.2020 Patentblatt 2020/16**

(73) Patentinhaber: **Ceratizit Austria Gesellschaft m.b.H.**
**6600 Reutte (AT)**

(72) Erfinder:
• **KRABICHLER, Markus**
**6600 Reutte (AT)**
• **BURTSCHER, Peter**
**6600 Reutte (AT)**

(74) Vertreter: **Ciesla, Dirk et al**
**IP Department**
**Plansee Group**
**Plansee Group Service GmbH**
**6600 Reutte (AT)**

(56) Entgegenhaltungen:
EP-A1- 0 264 673     EP-A1- 3 034 216
DE-A1- 3 344 477     US-A1- 2011 027 025

**Beschreibung**

Die Erfindung betrifft ein Fräsverfahren mit den Merkmalen des Oberbegriffs von Anspruch 1.

Für eine effiziente Zerspanung bei der Erzeugung von Plan- und Formflächen hat sich das sogenannte Hochvorschubfräsen (engl. *High Feed Cutting*) durchgesetzt. Hochvorschubfräsen ist Fräsen mit relativ geringen Schnitttiefen und hohen Vorschubgeschwindigkeiten. Die Schnitttiefe wird dabei durch einen kleinen Einstellwinkel (engl. *lead angle*) begrenzt. Der Einstellwinkel ist der Winkel zwischen der Hauptschneide des Schneideinsatzes (in der Regel eine Wendeschneidplatte) und der Werkstückoberfläche.

Typische Vorschubraten bei diesem Verfahren liegen in der Größenordnung von 0,7 bis 3 mm/Zahn, die axialen Schnitttiefen $a_p$ liegen typischerweise unter 2 mm.

Die Spindel steht beim Hochvorschubfräsen senkrecht zur bearbeiteten Werkstückoberfläche. Vorteilhaft ist es, dass die Schnittkräfte hauptsächlich in axialer Richtung des Werkzeugs auftreten. Die Schnittkräfte werden entlang der Spindelachse und somit entlang einer besonders steifen Richtung auf das Werkzeug übertragen.

Bei den dafür verwendeten Schneideinsätzen handelt es sich typischerweise um dreieckige oder viereckige Wendeschneidplatten. Eine typische Wendeschneidplatte für das Hochvorschubfräsen ist beispielsweise in der AT12004U1 gezeigt. Gängige Einstellwinkel beim Hochvorschubfräsen sind kleiner als 20°.

Das Hochvorschubfräsen wird in der Regel für eine Erzeugung von Planflächen an ebenen Werkstücken eingesetzt.

Ferner sind aus dem Stand der Technik Fräsverfahren mit geneigter Spindelachse bekannt.

Die EP 0264673 A1, die den Oberbegriff des Patentanspruchs 1 offenbart, zeigt ein Sturzfräsverfahren, wobei der Sturzwinkel ein Fräsen im stoßenden und im ziehenden Verfahren erlaubt.

Die EP 3034216 A1 zeigt einen gegenüber einer Werkzeugoberfläche geneigten Werkzeugkopf.

Die US 2011/027025 A1 zeigt ein Tauchfräsverfahren. Der Vorschub erfolgt dabei entlang der Spindelachse.

Die DE 3344477 A1 zeigt ein Verfahren zum Fräsen eines radial vorspringenden Bereichs an einem langgestreckten Werkstück, insbesondere einer Nockenwelle. Der Fräskopf ist gegenüber einer Werkstücklängsachse geneigt. Die Zustellung erfolgt normal zur Werkstücklängsachse, um das Nockenprofil zu erzeugen. Es besteht kein Vorschub entlang der Werkstücklängsachse.

Aufgabe der vorliegenden Erfindung ist es ein Fräsverfahren anzugeben, mit welchem die Vorteile des Hochvorschubfräsen auf die Bearbeitung von gekrümmten Oberflächen übertragbar werden.

Die Aufgabe wird gelöst mit einem Verfahren mit den Merkmalen von Anspruch 1. Vorteilhafte Ausführungsformen sind in den abhängigen Ansprüchen angegeben.

Zur Bearbeitung komplex geformter Werkstücke wie etwa Turbinenschaufeln ist es üblich, die Spindelachse des Fräswerkzeugs gegenüber der bearbeiteten Werkstückoberfläche zu verkippen. Diese Verkippung oder Schrägstellung der Spindelachse wird auch als Sturz bezeichnet und erfolgt in Vorschubrichtung, also dermaßen, dass die Spindelachse des Fräswerkzeugs mit einer Ebenennormalen (einem Normalvektor) der bearbeiteten Werkstückoberfläche einen Winkel von größer 0° einnimmt. Der Winkel wird also positiv in Vorschubrichtung definiert. Die Schrägstellung der Spindelachse ist notwendig, um komplexen Oberflächenkonturen folgen zu können und die gerade nicht im Eingriff befindlichen Schneideinsätze des Fräswerkzeugs freizustellen. Die Bearbeitung erfolgt mit Rundplattenfräsern, Kugelkopffräsern oder Kugelschaftfräsern aus Vollhartmetall.

Erfindungsgemäß ist ein Verfahren zum Fräsen eines Werkstücks vorgesehen, mit wenigstens einem im Wesentlichen polygonalen Schneideinsatz, welcher in einem Werkzeughalter angeordnet ist, wobei eine Spindelachse des Werkzeughalters gegenüber einer Ebenennormalen zur bearbeiteten Werkstückoberfläche geneigt ist, wobei das Verfahren zum Fräsen mit einem zu einer Rotation des Werkzeughalters um die Spindelachse simultanen Vorschub in einer Vorschubrichtung schräg zur Spindelachse des Werkzeughalters und quer zur Ebenennormalen erfolgt, dadurch gekennzeichnet, dass die Spindelachse gegenüber der Ebenennormalen einen in Vorschubrichtung positiv definierten Winkel zwischen 3° und 35° einnimmt, und wobei ein effektiver Einstellwinkel zwischen einer Hauptschneide des Schneideinsatzes und der bearbeiteten Werkstückoberfläche zwischen 5° und 20° beträgt und wobei der Schneideinsatz im Werkzeughalter so eingestellt ist, dass zwischen einer Normalen zur Spindelachse und der Hauptschneide des Schneideinsatzes ein theoretischer Einstellwinkel zwischen 20° und 40° besteht..

Im Wesentlichen polygonale Grundform bedeutet, dass der Schneideinsatz eine Grundgestalt eines Vielecks aufweist, gegebenenfalls mit verrundeter Außenkontur.

Durch die Verkippung der Spindelachse des Fräswerkzeugs in Vorschubrichtung wird der Einstellwinkel zwischen der Hauptschneide des Schneideinsatzes und der Werkstückoberfläche verkleinert. Dies würde bei einer für Hochvorschubfräsen üblichen Einbaulage des Schneideinsatzes am Werkzeughalter eine maximal erreichbare axiale Schnitttiefe des Schneideinsatzes derart reduzieren, dass eine wirtschaftliche Fräsbearbeitung nicht mehr möglich wäre.

Als Abhilfe wird vorgeschlagen, die Anstellung der Schneidkante des Schneideinsatzes am Fräswerkzeug so zu verändern, dass die Schrägstellung der Spindelachse kompensiert wird.

Durch das vorgeschlagene Verfahren wird es möglich, Schneideinsätze mit polygonaler Grundform für das Hochvorschubfräsen auch in Anwendungen mit gekippter Spindelachse einzusetzen.

In anderen Worten wird erfindungsgemäß ein werkzeug-inhärenter Einstellwinkel gewählt, der für ein Hochvorschubfräsen zu groß und damit ungeeignet wäre. Mit werkzeug-inhärentem oder theoretischem Einstellwinkel ist jener Einstellwinkel gemeint, der sich bei ungeneigter Spindelachse (also 90° zwischen Spindelachse und Werkstückoberfläche) zwischen einer Schneidkante und der Werkstückoberfläche einstellt.

Erst durch die Neigung der Spindelachse wird am Werkstück ein effektiver Einstellwinkel erzielt, der ein Hochvorschubfräsen an komplex geformten Werkstücken wie Turbinenschaufeln erlaubt.

Es ist vorgesehen, dass der Schneideinsatz im Werkzeughalter so eingestellt ist, dass zwischen einer Normalen zur Spindelachse und der Hauptschneide des Schneideinsatzes ein theoretischer (werkzeug-inhärenter) Einstellwinkel zwischen 20° und 40° besteht. Anders ausgedrückt besteht bei senkrechter Stellung der Spindelachse auf eine bearbeitete Werkstückoberfläche zwischen dieser und der Hauptschneide des Schneideinsatzes ein theoretischer (werkzeug-inhärenter) Einstellwinkel zwischen 20° und 40°.

Bevorzugt ist vorgesehen, dass der wenigstens eine Schneideinsatz als im Wesentlichen dreieckige oder im Wesentlichen viereckige oder im Wesentlichen fünfeckige Wendeschneidplatte ausgeführt ist. "Im Wesentlichen" bedeutet hier, dass die Grundgestalt des Schneideinsatzes dreieckig, viereckig bzw. fünfeckig ist. Davon sind auch Abweichungen von der strikten geometrischen Definition eines Dreiecks, Vierecks bzw. Fünfecks erfasst.

In der Regel weisen die Schneideinsätze in einer Draufsicht eine abgerundete Form eines gleichseitigen Dreiecks bzw. eine abgerundete Form eines Quadrats bzw. eine abgerundete Form eines regelmäßigen Fünfecks auf. Die Seitenkanten - an welchen die Schneiden ausgebildet sind - sind dabei konvex nach außen gekrümmt. Ein Krümmungsradius einer Hauptschneide ist bevorzugt wenigstens 1,5 mal größer als ein Radius eines Inkreises der Kontur des Schneideinsatzes in der Draufsicht.

Während bei Rundplatten eine Neigung der Spindelachse keine Änderung des Einstellwinkels der Schneidkante gegenüber dem Werkstück bewirkt, führt eine Verkippung der Spindelachse bei Verwendung von Schneideinsätzen mit polygonaler Grundform zu einer Änderung des Einstellwinkels der Schneidkante. Sind nun am Werkzeughalter Schneideinsätze mit polygonaler Grundform derart orientiert, dass bei zur bearbeiteter Werkstückoberfläche senkrechter Spindelachse Bedingungen für eine Hochvorschubfräsen gegeben sind, geht durch Verkippen der Spindelachse diese Eignung verloren. Das erfindungsgemäße Verfahren erlaubt es, statt den bislang für Fräsoperationen mit geneigter Spindelachse üblichen Rundplatten nun Dreieck- , Viereck- oder Fünfeckplatten einzusetzen.

Es ist vorgesehen, dass der Winkel zwischen der Spindelachse und der Ebenennormalen zwischen 3° und 35°, weiter bevorzugt zwischen 10° und 30°, besonders bevorzugt zwischen 15° und 25° beträgt.

Bevorzugt beträgt eine axiale Schnitttiefe (ap) unter 3,0 mm, bevorzugt unter 2,50 mm.

Bevorzugt beträgt ein Vorschub pro Zahn (fz) zwischen 0,60 und 0,90 mm.

Das Verfahren ist insbesondere geeignet für Fräsoperationen an Turbinenschaufeln: die komplexe Gestalt von Turbinenschaufeln erfordert in der Regel eine markante Schrägstellung der Spindelachse des eingesetzten Fräswerkzeugs. Das Verfahren eignet sich insbesondere für zur Bearbeitung des Schaufelblattes sowie zum Herstellen von Aufnahmenuten am Schaufelfuß.

Schutz wird auch begehrt für eine Verwendung eines im Wesentlichen polygonalen Schneideinsatzes für eine Bearbeitung eines Werkstücks.

Bei der Verwendung des Schneideinsatzes ist vorgesehen, dass der Schneideinsatz im Werkzeughalter so eingestellt ist, dass zwischen einer Normalen zur Spindelachse und einer Hauptschneide des Schneideinsatzes ein theoretischer Einstellwinkel zwischen 20° und 40° besteht.

Bevorzugt ist der Schneideinsatz als im Wesentlichen dreieckige oder im Wesentlichen viereckige oder im Wesentlichen fünfeckige Wendeschneidplatte ausgeführt.

Erfindungsgemäß beträgt der Winkel zwischen der Spindelachse und der Ebenennormalen zwischen 3° und 35°.

Bevorzugt handelt es sich bei der Bearbeitung um ein Hochvorschubfräsen mit axialen Schnitttiefen $a_p$ unter 3,0 mm, weiter bevorzugt 2,50 mm. Bevorzugt ist ein Vorschub pro Zahn $f_z$ zwischen 0,60 und 0,90 mm vorgesehen.

Die Erfindung wird im Folgenden durch Figuren näher erläutert. Dabei zeigt bzw. zeigen:

Fig. 1a-1b schematische Darstellungen von Werkzeughaltern mit Schneideinsätzen

Fig. 2 ein Schema zu Einstellwinkeln bei einem runden Schneideinsatz

Fig. 3a-3c polygonale Schneideinsätze in Draufsicht

Fig. 4 einen Werkzeughalter in einer Seitenansicht

Fig. 5a-5b eine schematische Darstellung des Verfahrens

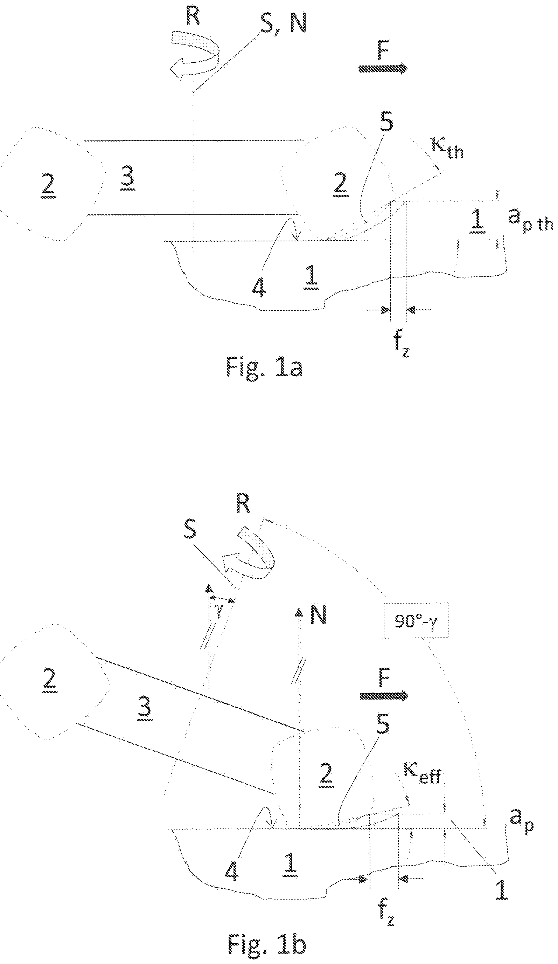

Figur 1a zeigt schematisch eine Ausrichtung von Schneideinsätzen 2 an einem angedeuteten Werkzeughalter 3 zu einem Werkstück 1, die sich bei ungeneigter Spindelachse S einstellen würde. Eine Vorschubrichtung F des Schneideinsatzes 2 ist über einen Blockpfeil kenntlich gemacht. Der Werkzeughalter 3 ist rechtsdrehend ausgeführt, siehe Drehrichtung R. Eine Ebenennormale N ist senkrecht zur bearbeiteten Werkstückoberfläche 4. Bei einem Winkel der Spindelachse S zu einer bearbeiteten Werkstückoberfläche 4 von hier 90° entsprechend einem Sturz oder Neigung der Spindelachse γ gegenüber der Ebenennormalen N von 0° ergibt sich ein theoretischer Einstellwinkel κ$_{th}$ zwischen einer Hauptschneide 5 und der bearbeiteten Werkstückoberfläche 4. Wegen der Krümmung der Hauptschneide 5 wird der Einstellwinkel an der Sehne der Hauptschneide 5 bestimmt. Die Sehne erstreckt sich zwischen zwei Enden einer Hauptschneide 5. Der hier gezeigte Einstellwinkel κ$_{th}$ ist mit hier 30° jedoch für ein Hochvorschubfräsen zu groß und ungeeignet Die aus dem Einstellwinkel κ$_{th}$ resultierende axiale Schnitttiefe a$_{p\,th}$ ist zu groß, um hohe Vorschubgeschwindigkeiten zu erlauben. Durch eine strichlierte Hilfslinie ist am Werkstück 1 jener Spanquerschnitt angedeutet, welcher beim nächsten Eintritt eines Schneideinsatzes 2 abgenommen wird.

Figur 1b zeigt eine Konfiguration, wie sie für das erfindungsgemäße Verfahren vorgesehen ist:
Die Spindelachse S ist hier in einem Winkel γ von hier etwa 20° gegenüber der Ebenennormalen N geneigt. Es ergibt sich damit ein effektiver Einstellwinkel κ$_{eff}$ zwischen der Hauptschneide 5 und der Werkstückoberfläche von 10°.

Durch den über die Neigung der Spindelachse S verringerten Einstellwinkel κ kann ein Vorschub pro Zahn f$_z$ erhöht werden. Durch die Überlagerung des werkzeug-inhärenten Einstellwinkels κ$_{th}$ mit der Neigung der Spindelachse S in einem Winkel γ ergibt sich gegenüber der bearbeiteten Werkstückoberfläche ein effektiver Einstellwinkel κ$_{eff}$ zu

$$\kappa_{eff} = \kappa_{th} - \gamma$$

mit κ$_{th}$ als theoretischem oder werkzeug-inhärenten Einstellwinkel.

Bei gekrümmten Werkstückoberflächen kann die Ebenennormale N am radial innenliegenden Angriffspunkt des betreffenden Schneideinsatzes angelegt werden, wie in Figur 1b gezeigt.

Die hier gezeigten Werte für den Neigungswinkel γ der Spindelachse S und den resultierenden Einstellwinkel κ zwischen der Hauptschneide 5 und der Werkstückoberfläche 4 sind exemplarisch. Bevorzugte Werte für den Neigungswinkel γ der Spindelachse S gegenüber der Ebenennormale N liegen in einem Bereich zwischen 3° und 35°, weiter bevorzugt zwischen 10° und 30°, besonders bevorzugt zwischen 15° und 25°,

Der effektive Einstellwinkel κ$_{eff}$ zwischen der Hauptschneide 5 und der Werkstückoberfläche 4 resultiert aus der Einbaulage des Schneideinsatzes 2 am Werkzeughalter 3 und dem Neigungswinkel γ der Spindelachse S.

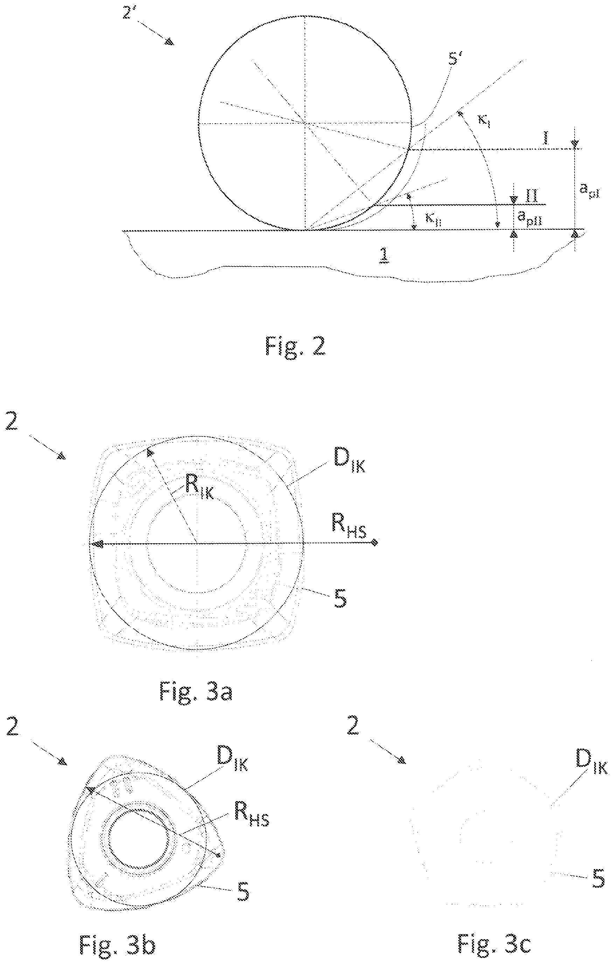

Figur 2 zeigt einen runden Schneideinsatz 2', wie es für das erfindungsgemäße Verfahren nicht vorgesehen ist, im Eingriff mit einem Werkstück 1.

In der Figur 2 sind zwei Bearbeitungssituationen gezeigt:

in der Konfiguration I wird der Schneideinsatz 2' mit einer großen axialen Schnitttiefe a$_{pI}$ eingesetzt. Es resultiert ein großer Einstellwinkel κ$_I$,
in der Konfiguration II wird der Schneideinsatz 2' mit einer kleinen axialen Schnitttiefe a$_{pII}$ eingesetzt. Es resultiert ein kleiner Einstellwinkel κ$_{II}$.

Bei runden Schneideinsätzen steigt der Einstellwinkel mit zunehmender Schnitttiefe an, um bei der maximalen Schnitttiefe entsprechend dem Radius des runden Schneideinsatzes 45° anzunehmen. Durch die Kreisbogen-Form der Schneidkante liegt am tiefsten Punkt ein tatsächlicher Einstellwinkel von 0° und bei der maximalen Schnitttiefe entsprechend dem Radius ein tatsächlicher Einstellwinkel von 90° vor.

Bei runden Schneideinsätzen nimmt die Länge einer im Eingriff befindlichen Schneidkante bei gegebener Schnitttiefe mit steigendem Durchmesser des Schneideinsatzes zu; die Kräfte auf die Schneidkante nehmen mit zunehmender Länge ab.

Da für Hochvorschubfräsen geringe Schnittkräfte angestrebt werden, sind für das Hochvorschubfräsen mit runden Schneideinsätzen möglichst große Durchmesser bevorzugt. Darin liegt auch eine wesentliche Limitierung von runden Schneideinsätzen, da ein der Krümmungsradius der Schneidkante dem Radius der geometrischen Abmessung entspricht. Ein großer Krümmungsradius bedeutet also auch eine große Wendeschneidplatte.

Figuren 3a bis 3c zeigen schematisch im Wesentlichen polygonale Schneideinsätze 2, wie sie für das erfinderische Verfahren vorgesehen sind, in Draufsicht.

Der Schneideinsatz von Figur 3a ist mit quadratischer Grundgestalt (sogenannte S-Platte) mit konvex gerundeter Außenkontur ausgebildet. Bevorzugt ist an jeder verrundeten Seitenkante des Schneideinsatzes 2 eine Schneidkante (hier hervorgehoben die Hauptschneide 5) ausgebildet. So erhält man im Falle der quadratischen Grundgestalt einen 4-fach indexierbaren Schneideinsatz 4~fach indexierbar bedeutet, dass vier unabhängige Hauptschneiden 5 für eine Bearbeitung verwendetet werden können. In diesem Fall wird durch eine Drehung des Schneideinsatzes 2 um 90° eine neue Bearbeitungsposition eingestellt. Bei einer quadratischen Grundgestalt des Schneideinsatzes 2 ergeben sich somit vier unabhängige Hauptschneiden 5. Zur Verdeutlichung der Gestalt des Schneideinsatzes 2 ist ein Inkreis D$_{IK}$ eingeschrieben. Ein Krümmungsradius R$_{HS}$ einer Hauptschneide 5 ist bevorzugt wenigstens 1,5-mal größer als der Radius des Inkreises D$_{IK}$.

Neben dem hier gezeigten Schneideinsatz 2 mit viereckiger Grundform kommen für das erfindungsgemäße Verfahren auch Schneideinsätze mit im Wesentlichen dreieckiger Grundform oder fünfeckiger Grundform in Betracht.

Figur 3b zeigt einen Schneideinsatz 2 mit im Wesentlichen dreieckiger Grundform (sogenannte T-Platte),

Figur 3c einen Schneideinsatz 2 mit im Wesentlichen fünfeckiger Grundform (sogenannte P-Platte).

In Abgrenzung zu runden Schneideinsätzen gilt auch hier, dass ein Krümmungsradius einer Hauptschneide wenigstens 1,5-mal größer ist als ein Radius $R_{IK}$ eines Inkreises $D_{IK}$.

Für das erfindungsgemäße Verfahren zeigten viereckige Platten (S-Platten) das günstigste Verhältnis von nutzbarer Schnitttiefe und Anzahl an Indexier-Positionen.

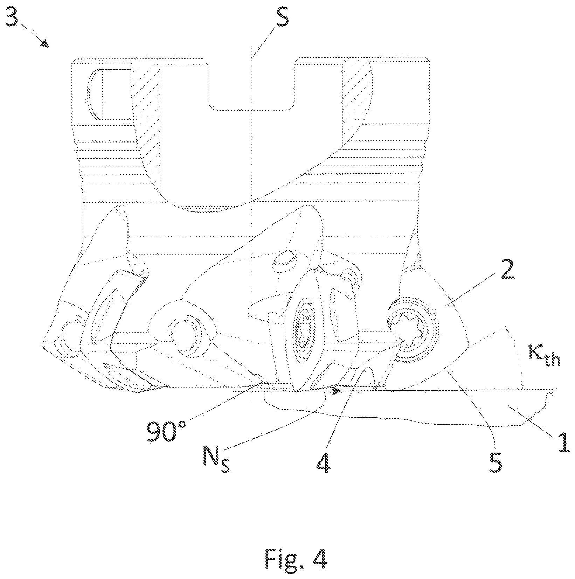

Figur 4 zeigt einen Werkzeughalter 3 mit einer Spindelachse S und einer Vielzahl an Schneideinsätzen 2. Der Werkzeughalter 3 ist gegenüber einer bearbeiteten Werkstückoberfläche 4 so eingestellt, dass die Spindelachse S senkrecht auf eine bearbeitete Werkstückoberfläche 4 steht.

Ein Schneideinsatz 2 ist im Werkzeughalter 3 so eingestellt, dass zwischen einer Normalen $N_S$ zur Spindelachse S und einer Hauptschneide 5 des Schneideinsatzes 2 ein theoretischer Einstellwinkel $\kappa_{th}$ zwischen 20° und 40° besteht. Durch die Einbaulage der Schneideinsätze 2 ist im Werkzeughalter 3 ergibt sich ein theoretischer (werkzeug-inhärenter) Einstellwinkel $\kappa_{th}$ zwischen einer Hauptschneide 5 und einer bearbeiteten Werkstückoberfläche 4. Der hier gezeigte Einstellwinkel $\kappa_{th}$ wäre jedoch für ein Hochvorschubfräsen zu groß und damit ungeeignet.

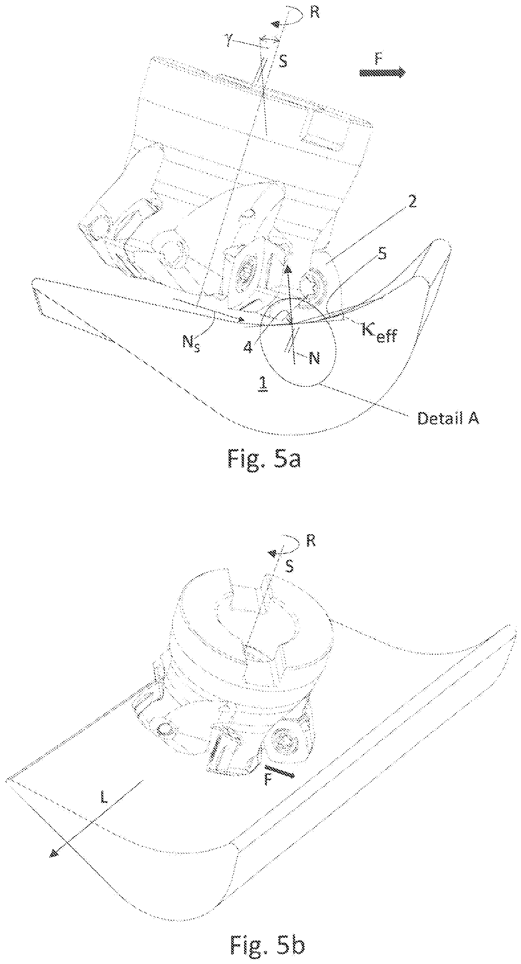

Erst durch das erfindungsgemäße Verfahren, das in den Figuren 5a und 5b illustriert wird, kann die in Figur 4 gezeigte Konfiguration von Werkzeughalter 3 und Schneideinsätzen 2 für ein Hochvorschubfräsen genutzt werden.

Figur 5a und Figur 5b zeigen Darstellungen des erfindungsgemäßen Verfahrens zum Fräsen eines Werkstücks 1, hier einer Turbinenschaufel in unterschiedlichen Ansichten.

Ein Werkzeughalter 3 weist eine Vielzahl von im Wesentlichen polygonalen Schneideinsätzen 2 auf. Im vorliegenden Ausführungsbeispiel haben die Schneideinsätze 2 eine quadratische Grundgestalt. Die Spindelachse S des Werkzeughalters 3 nimmt gegenüber der Ebenennormalen N zur bearbeiteten Werkstückoberfläche 4 einen Winkel $\gamma$ von größer als 0° ein. Bevorzugte Werte für den Neigungswinkel $\gamma$ der Spindelachse S liegen in einem Bereich zwischen 3° und 35°, weiter bevorzugt zwischen 10° und 30°, besonders bevorzugt zwischen 15° und 25°. In der Seitenansicht gemäß Figur 5a ersichtlich, beträgt der Winkel $\gamma$ im vorliegenden Beispiel ca. 20°. Der Winkel $\gamma$ wird positiv in Vorschubrichtung F gemessen.

Der aus der Neigung der Spindelachse S sowie der Einbaulage eines Schneideinsatzes 2 am Werkzeughalter 3 resultierende effektive Einstellwinkel $\kappa_{eff}$ zwischen einer Hauptschneide 5 des Schneideinsatzes 2 und der bearbeiteten Werkstückoberfläche 4 beträgt zwischen 5° und 20°. Im vorliegenden Beispiel beträgt effektive Einstellwinkel $\kappa_{eff}$ rund 12°.

Als Referenz für die Winkelangaben bezüglich der bearbeiteten Werkstückoberfläche 4 wird der radial innenliegende Angriffspunkt des im Eingriff befindlichen Schneideinsatzes 2 herangezogen (Detail A).

Das Verfahren erlaubt eine Fräsbearbeitung mit hohen Vorschüben. Typische Werte, die bei dem erfindungsgemäßen Verfahren erreicht werden, liegen bei $f_z$ 0,60 - 0,90 mm / Zahn. Bei der Verwendung von Rundplatten nach dem Stand der Technik sind hingegen nur geringere Vorschübe von ca. 0,35-0,45 mm / Zahn möglich.

Ein weiterer Vorteil in der Verwendung von polygonalen Schneideinsätzen liegt darin, dass auch größere Schnitttiefen realisiert werden können, wenn es eine Bearbeitungssituation erfordert: so könnte beispielsweise eine Schnitttiefe bis zu 5 mm bei verringerten Vorschubwerten ohne Werkzeugwechsel erfolgen. Solche Schnitttiefen wären mit Rundplatten nicht abzubilden.

Figur 5b zeigt das Verfahren in einer perspektivischen Darstellung. Bevorzugt ist die Vorschubrichtung F im Wesentlichen normal zu einer Längsachse L der Turbinenschaufel, wie aus Figur 5b ersichtlich.

**Patentansprüche**

1. Verfahren zum Fräsen eines Werkstücks (1) mit wenigstens einem im Wesentlichen polygonalen Schneideinsatz (2), welcher in einem Werkzeughalter (3) angeordnet ist, wobei eine Spindelachse (S) des Werkzeughalters (3) gegenüber einer Ebenennormalen (N) zu einer bearbeiteten Werkstückoberfläche (4) geneigt ist, wobei das Verfahren zum Fräsen mit einem zu einer Rotation des Werkzeughalters (3) um die Spindelachse (S) simultanen Vorschub in einer Vorschubrichtung (F) schräg zur Spindelachse (S) des Werkzeughalters (3) und quer zur Ebenennormalen (N) erfolgt, wobei die Spindelachse (S) gegenüber der Ebenennormalen (N) einen in Vorschubrichtung (F) positiv definierten Winkel ($\gamma$) zwischen 3° und 35° einnimmt, **dadurch gekennzeichnet, dass** ein effektiver Einstellwinkel ($\kappa_{eff}$) zwischen einer Hauptschneide (5) des Schneideinsatzes (2) und der bearbeiteten Werkstückoberfläche (4) zwischen 5° und 20° beträgt und wobei der Schneideinsatz (2) im Werkzeughalter (3) so eingestellt ist, dass zwischen einer Normalen (Ns) zur Spindelachse (S) und der Hauptschneide (5) des Schneideinsatzes (2) ein theoretischer Einstellwinkel ($\kappa_{th}$) zwischen 20° und 40° besteht.

2. Verfahren nach Anspruch 1, wobei der wenigstens eine Schneideinsatz (2) als im Wesentlichen dreieckige oder im Wesentlichen viereckige oder im Wesentlichen fünfeckige Wendeschneidplatte ausgeführt ist.

**3.** Verfahren nach einem der vorangegangenen Ansprüche, wobei eine axiale Schnitttiefe ($a_p$) unter 3,0 mm beträgt.

**4.** Verfahren nach einem der vorangegangenen Ansprüche, wobei ein Vorschub pro Zahn ($f_z$) zwischen 0,60 und 0,90 mm beträgt.

**5.** Verwendung eines im Wesentlichen polygonalen Schneideinsatzes (2) für eine Bearbeitung eines Werkstücks (1) in einem Verfahren nach einem der vorangegangenen Ansprüche.

**Claims**

**1.** A method for milling a workpiece (1) by means of at least one substantially polygonal cutting insert (2), which is arranged in a tool holder (3), wherein a spindle axis (S) of the tool holder (3) is inclined with respect to a plane normal (N) to a machined workpiece surface (4), wherein the milling process is carried out with a feed simultaneous to a rotation of the tool holder (3) about the spindle axis (S) in a feed direction (F) oblique to the spindle axis (S) of the tool holder (3) and transverse to the plane normal (N), wherein the spindle axis (S) assumes an angle ($\gamma$) of between 3° and 35°, defined positively in the feed direction (F), with respect to the plane normal (N), **characterized in that** an effective setting angle ($\kappa_{eff}$) between a main cutting edge (5) of the cutting insert (2) and the machined workpiece surface (4) is between 5° and 20°, and wherein the cutting insert (2) is set in the tool holder (3) in such a way that between a normal (Ns) to the spindle axis (S) and the main cutting edge (5) of the cutting insert (2) there is a theoretical setting angle ($\kappa_{th}$) of between 20° and 40°.

**2.** The method as claimed in claim 1, wherein the at least one cutting insert (2) is configured as a substantially triangular or a substantially quadrangular or a substantially pentagonal indexable insert.

**3.** The method as claimed in one of the preceding claims, wherein an axial cutting depth ($a_p$) is less than 3.0 mm.

**4.** The method as claimed in one of the preceding claims, wherein a feed per tooth ($f_z$) is between 0.60 and 0.90 mm.

**5.** A use of a substantially polygonal cutting insert (2) for a machining of a workpiece (1) in a method according to any one of the preceding claims.

**Revendications**

**1.** Procédé de fraisage d'une pièce (1) avec au moins une insert de coupe essentiellement polygonal (2), qui est agencé dans un porte-outil (3), un axe de broche (S) du porte-outil (3) étant incliné par rapport à une normale au plan (N) vers une surface de pièce usinée (4), le procédé de fraisage étant effectué avec une avance simultanée à une rotation du porte-outil (3) autour de l'axe de broche (S) dans une direction d'avance (F) oblique par rapport à l'axe de broche (S) du porte-outil (3) et transversale par rapport à la normale au plan (N), l'axe de broche (S) formant par rapport à la normale au plan (N) un angle ($\gamma$) défini positivement dans la direction d'avance (F), compris entre 3° et 35°, **caractérisé en ce qu'**un angle de réglage effectif ($\kappa_{eff}$) entre une arête de coupe principale (5) de l'insert de coupe (2) et la surface de pièce usinée (4) est compris entre 5° et 20°, et dans lequel l'insert de coupe (2) est réglé dans le porte-outil (3) de telle sorte qu'un angle de réglage théorique ($\kappa_{th}$) compris entre 20° et 40° existe entre une normale ($N_s$) à l'axe de broche (S) et l'arête de coupe principale (5) de l'insert de coupe (2).

**2.** Procédé selon la revendication 1, dans lequel l'au moins un insert de coupe (2) est réalisé sous la forme d'une plaquette de coupe indexable essentiellement triangulaire ou essentiellement quadrangulaire ou essentiellement pentagonale.

**3.** Procédé selon l'une quelconque des revendications précédentes, dans lequel une profondeur de coupe axiale ($a_p$) est inférieure à 3,0 mm.

**4.** Procédé selon l'une quelconque des revendications précédentes, dans lequel une avance par dent ($f_z$) est comprise entre 0,60 et 0,90 mm.

**5.** Utilisation d'un insert de coupe essentiellement polygonal (2) pour un usinage d'une pièce (1) dans un procédé selon l'une quelconque des revendications précédentes.

Fig. 1a

Fig. 1b

Fig. 2

Fig. 3a

Fig. 3b

Fig. 3c

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 12004 U1
- EP 0264673 A1
- EP 3034216 A1
- US 2011027025 A1
- DE 3344477 A1